(19)

Europäisches Patentamt
European Patent Office
Office européen des brevets

(11) **EP 3 174 150 A1**

(12) **EUROPEAN PATENT APPLICATION**

(43) Date of publication:
**31.05.2017 Bulletin 2017/22**

(51) Int Cl.:
*H01M 8/18* (2006.01)   *H01M 8/0432* (2016.01)

(21) Application number: **16200413.9**

(22) Date of filing: **24.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.11.2015 KR 20150167878**

(71) Applicant: OCI Company Ltd.
**Seoul 100-718 (KR)**

(72) Inventors:
• **KIM, Jae-Min**
  **462-807 Gyeonggi-do (KR)**
• **UM, Myung-Sup**
  **462-807 Gyeonggi-do (KR)**
• **KIM, Soo-Whan**
  **462-807 Gyeonggi-do (KR)**
• **YE, Hee-Chang**
  **462-807 Gyeonggi-do (KR)**

(74) Representative: **Awapatent AB**
**P.O. Box 5117**
**200 71 Malmö (SE)**

(54) **METHOD AND APPARATUS FOR MEASURING ELECTROLYTE BALANCE OF REDOX FLOW BATTERY**

(57)     A method for measuring an electrolyte balance of a redox flow battery may include: charging the redox flow battery by applying a current to a stack; measuring temperatures of an anode electrolyte solution and a cathode electrolyte solution while the redox flow battery is charged; calculating a temperature change rate of the anode electrolyte solution over time and a temperature change rate of the cathode electrolyte solution over time; deciding a first change time corresponding to an inflection point of the temperature change rate of the anode electrolyte solution over time and a second change time corresponding to an inflection point of the temperature change rate of the cathode electrolyte solution over time; and calculating an average electrolyte oxidation number of the redox flow battery, using the first change time, the second change time, an oxidation number of the anode electrolyte and an oxidation number of the cathode electrolyte.

FIG. 1

EP 3 174 150 A1

## Description

### Technical Field

The present disclosure relates to a method and apparatus for measuring a balance between electrolytes contained in electrolyte solutions which are used in a redox flow battery.

### Description of the Related Art

A redox flow battery refers to an electrochemical storage device which stores or discharges electrical energy through an oxidation/reduction reaction of ions contained in an electrolyte solution. An anode electrolyte solution and a cathode electrolyte solution in a stack of the redox flow battery are isolated from each other by an electrolyte film, and a concentration difference between ions existing at both sides of the electrolyte film causes diffusion.

However, depending on the types of electrolytes contained in the respective electrolyte solutions, the diffusion speed may differ. Thus, as the time elapses, the electrolytes may be concentrated on any one of the anode and cathode. The concentration may cause an imbalance in capacity between the electrolytes, and lower the use rate of the electrolyte solutions, thereby reducing the capacity of the battery. Such a phenomenon is referred to as a capacity fade caused by a cross-over of electrolytes.

In order to remove such a capacity fade caused by the imbalance in capacity between the electrolytes, both of the anode and cathode electrolyte solutions may be mixed and divided into two parts, such that the anode and the cathode have the same oxidation number. Such a method is referred to as a total mixing method. In this case, however, pump energy required for mixing the anode and cathode electrolyte solutions and energy of the charged battery are all lost, and a lot of time is required until the total mixing is completed.

The technique used for preventing such an energy and time waste is to partially transfer electrolyte corresponding to a battery capacity fade from one tank to the other tank. Such a technique is referred to as partial transfer. In order to apply this technique, information on battery capacity fades of the anode electrolyte solution and the cathode electrolyte solution must be preferentially evaluated.

In addition to the capacity fade caused by an electrolyte capacity imbalance between the anode electrolyte solution and the cathode electrolyte solution, a capacity fade may be caused by an imbalance in oxidation number between electrolytes. Theoretically, while the anode electrolyte solution and the negative electrolyte solution form an oxidation-reduction pair, the oxidation number balance of the entire solution needs to be constantly maintained at all times. However, when a battery is used, an oxidation-reduction reaction may independently occur only in one electrolyte solution, due to a side reaction such as an introduction of air or an over-voltage. As a result, the oxidation number balance of the entire electrolyte solution may be upset. As described above, a capacity fade caused by a cross-over can be theoretically recovered 100% by total mixing or partial transfer. However, an imbalance in oxidation number between electrolytes by an irreversible reaction causes a permanent battery capacity fade.

Therefore, there is a demand for a technique which is capable of quantitatively measuring and evaluating a balance in oxidation number between electrolytes contained in an anode electrolyte solution and a cathode electrolyte solution.

### SUMMARY

Various embodiments are directed to and apparatus for measuring an electrolyte balance of a redox flow battery, which is capable of quantitatively measuring and evaluating an oxidation balance between electrolytes contained in an anode electrolyte solution and a cathode electrolyte solution which are used in the redox flow battery.

Also, various embodiments are directed to and apparatus for measuring an electrolyte balance of a redox flow battery, which is capable of more easily evaluating a balance between electrolytes contained in electrolyte solutions of the redox flow battery, through an in-situ process, instead of an ex-situ process in which an electrolyte solution is separately extracted and evaluated through an additional device.

Also, various embodiments are directed to and apparatus for measuring an electrolyte balance of a redox flow battery, which is capable of accurately measuring an oxidation number of electrolyte because oxidation caused by an extraction of electrolyte solution or contact between electrolyte solution and air does not occur.

Also, various embodiments are directed to and apparatus for measuring an electrolyte balance of a redox flow battery, which is capable of measuring an electrolyte balance of the redox flow battery at a lower cost without an expensive OCV monitoring device or suitable equipment.

In an embodiment, a method for measuring a balance between electrolytes contained in electrolyte solutions of a redox flow battery may include: charging the redox flow battery by applying a current to a stack; measuring temperatures of an anode electrolyte solution and a cathode electrolyte solution while the redox flow battery is charged; calculating a temperature change rate of the anode electrolyte solution over time and a temperature change rate of the cathode electrolyte solution over time; deciding a first change time corresponding to an inflection point of the temperature change rate of the anode electrolyte solution over time and a second change time corresponding to an inflection point of the temperature change rate of the cathode electrolyte solution over time; and calculating an average electrolyte oxidation number of the redox flow battery, using the first change time, the second change time, an oxidation number of the anode electrolyte and an oxidation number of the cathode electrolyte.

The method may further include: adjusting an oxidation balance between the anode electrolyte contained in the anode electrolyte solution and the cathode electrolyte contained in the cathode electrolyte solution; measuring an open-circuit voltage (OCV) of the stack; and comparing the OCV and a reference voltage so as to decide whether to apply a current to the stack.

The charging of the redox flow battery may include applying a predetermined magnitude of current to the stack according to time.

The average electrolyte oxidation number of the redox flow battery may be calculated by Equation 1:

$$[Equation\ 1]$$

$$P = \frac{A \times t_1 + B \times t_2}{t_1 + t_2},$$

where P represents the average electrolyte oxidation number, A represents the oxidation number of the cathode electrolyte, B represents the oxidation number of the anode electrolyte, $t_1$ represents the first change time, and $t_2$ represents the second change time.

The method may further include comparing the average electrolyte oxidation number and a reference oxidation number, and deciding an electrolyte balance difference and electrolyte balance direction of the redox flow battery.

In an embodiment, an apparatus for measuring a balance between electrolytes contained in electrolyte solutions of a redox flow battery may include: a charge control unit configured to charge the redox flow battery by applying a current to a stack; a temperature measuring unit configured to measure temperatures of an anode electrolyte solution and a cathode electrolyte solution while the redox flow battery is charged; and a balance evaluation unit configured to calculate a temperature change rate of the anode electrolyte solution over time and a temperature change rate of the cathode electrolyte solution over time, decide a first change time corresponding to an inflection point of the temperature change rate of the anode electrolyte solution over time and a second change time corresponding to an inflection point of the temperature change rate of the cathode electrolyte solution over time, and calculate an average electrolyte oxidation number of the redox flow battery using the first change time, the second change time, an oxidation number of the anode electrolyte and an oxidation number of the cathode electrolyte.

In accordance with the embodiments of the present invention, the method and apparatus for measuring an electrolyte balance of a redox flow battery can quantitatively measure and evaluate the balance in oxidation number between electrolytes contained in the anode electrolyte solution and the cathode electrolyte solution which are used in the redox flow battery.

Furthermore, when measuring the balance between electrolytes contained in the electrolyte solutions of the redox flow battery, the method and apparatus can more easily evaluate the balance through an in-situ process, instead of an ex-situ process in which electrolyte solutions are separately extracted and evaluated through an additional device.

Furthermore, since oxidation caused by an extraction of electrolyte solution or contact between electrolyte solution and air does not occur, the method and apparatus can accurately measure the oxidation number of the electrolyte.

Furthermore, the method and apparatus can measure the electrolyte balance of the redox flow battery at a lower cost without an expensive OCV monitoring device or suitable equipment.

**BRIEF DESCRIPTION OF DRAWINGS**

FIG. 1 is a configuration diagram of an apparatus for measuring an electrolyte balance of a redox flow battery according to an embodiment of the present invention.

FIG. 2 is a flowchart of a method for measuring an electrolyte balance of a redox flow battery according to an embodiment of the present invention.

FIGS. 3 to 5 are graphs illustrating temperature changes of electrolyte solutions over time, which are measured through the method for measuring an electrolyte balance of a redox flow battery according to the embodiment of the present invention.

FIGS. 6 to 8 are graphs illustrating temperature changes of electrolyte solutions over time, which are measured through a method for measuring an electrolyte balance of a redox flow battery according to another embodiment of the present invention.

## DETAILED DESCRIPTION

Hereafter, embodiments of the present invention will be described with reference to the accompanying drawings. The following embodiments are provided as examples for efficiently delivering the idea of the present invention to those skilled in the art. Thus, the present invention is not limited to the following embodiments, but may be embodied into other forms. In the figures, the dimensions of layers and regions may be exaggerated for clarity of illustration. Throughout the specification, like reference numerals refer to like elements.

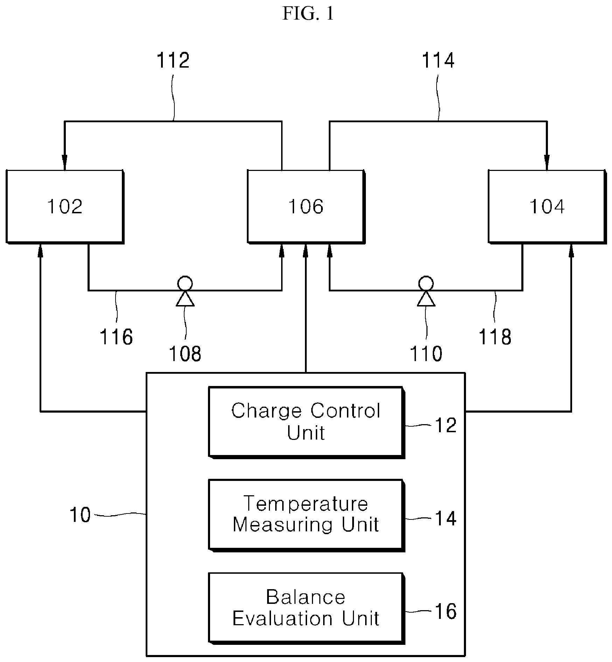

FIG. 1 is a configuration diagram of an apparatus for measuring an electrolyte balance of a redox flow battery according to an embodiment of the present invention.

Referring to FIG. 1, the redox flow battery according to the embodiment of the present invention includes a first electrolyte solution tank 102, a second electrolyte solution tank 104, a first pump 108, a second pump 110 and a stack 106.

The first electrolyte solution tank 102 and the stack 106 are connected through first and second flow paths 112 and 116, and the second electrolyte solution tank 104 and the stack 106 are connected through third and fourth flow paths 114 and 118. An arrow marked on each of the flow paths 112, 114, 116 and 118 indicates the direction in which an electrolyte solution flows.

The first and second electrolyte solution tanks 102 and 104 contain first and second electrolyte solutions, respectively. In an embodiment of the present invention, the first electrolyte solution may be set to an anode electrolyte solution containing anode electrolyte, and the second electrolyte solution may be set to a cathode electrolyte solution containing cathode electrolyte. Depending on embodiments, however, the first electrolyte solution may be set to the cathode electrolyte solution, and the second electrolyte solution may be set to the anode electrolyte solution. Hereafter, for convenience of description, the first electrolyte solution is referred to as the anode electrolyte solution, and the second electrolyte solution is referred to as the cathode electrolyte solution.

The first pump 108 is arranged on the second flow path 116, and performs a pumping operation for supplying the first electrolyte solution contained in the first electrolyte solution tank 102 to the stack 106. The second pump 110 is arranged on the fourth flow path 118, and performs a pumping operation for supplying the second electrolyte solution contained in the second electrolyte solution tank 102 to the stack 106.

The flow rates of the first and second electrolyte solutions supplied to the stack 106 are decided according to the number of revolutions or operation speed of the first and second pumps 108 and 110. In other words, as the number of revolutions or operating speed of the first and second pumps 108 and 110 per unit time is increased, the flow rate of the electrolyte solution supplied to the stack 106 rises.

The stack 106 stores or discharges electrical energy through an oxidation-reduction reaction of the electrolyte solution introduced thereto. Although not illustrated, the stack 106 includes a plurality of cells, and each of the cells constituting the stack 106 includes a diaphragm through which electrolyte or ions can be passed. Through the diaphragm, ions contained in the first and second electrolyte solutions introduced into the respective cells may be exchanged. Such an ion exchange causes an oxidation-reduction reduction between the electrolyte solutions in the cells. Through the oxidation-reduction reaction, electrical energy may be stored in the stack 106, or electrical energy stored in the stack 106 may be discharged to the outside.

Referring back to FIG. 1, the apparatus 10 for measuring an electrolyte balance of a redox flow battery according to the embodiment of the present invention includes a charge control unit 12, a temperature measuring unit 14 and a balance evaluation unit 16.

In order to measure the electrolyte balance of the redox flow battery, the charge control unit 12 charges the redox flow battery by applying a current to the stack 106.

In an embodiment of the present invention, the charge control unit 12 adjusts an oxidation number balance between anode electrolyte contained in the anode electrolyte solution and cathode electrolyte contained in the cathode electrolyte solution, and measures an open-circuit voltage (OCV) of the stack 106. In order to adjust the oxidation number balance between the anode electrolyte contained in the anode electrolyte solution and the cathode electrolyte contained in the cathode electrolyte solution, the charge control unit 12 may adjust the amounts of two electrolyte solutions to the same amount. Then, the charge control unit 12 compares the measured OCV to a reference voltage, and decides whether to apply a current to the stack 106. For example, when the measured OCV is lower than the reference voltage, the charge control unit 12 starts charging the redox flow battery by applying a current to the stack 106. On the other hand, when the measured open circuit voltage is lower than the reference voltage, the charge control unit 12 performs an operation of adjusting the oxidation number balance between the anode electrolyte and the cathode electrolyte.

When the charge operation for the redox flow battery is started by the charge control unit 12, the temperature measuring unit 14 measures the temperatures of the anode electrolyte and the cathode electrolyte while the charge operation is performed. The temperature measuring unit 14 may measure the temperatures of the anode electrolyte and the cathode electrolyte by receiving temperature values measured by a temperature sensor (not illustrated) installed in the redox flow battery. The temperature sensor (not illustrated) may be arranged inside or outside the electrolyte solution tanks 102 and 104, or arranged inside or outside the flow paths 112, 114, 116 and 118 or the stack 106.

The balance evaluation unit 16 calculates a temperature change rate of the anode electrolyte solution over time and a temperature change rate of the cathode electrolyte solution over time. For this operation, the balance evaluation unit 16 may generate a graph indicating a temperature change of the anode electrolyte solution over time and a temperature change of the cathode electrolyte solution over time. In the generated graph, the slope of a temperature change curve of the anode electrolyte solution indicates the temperature change rate of the anode electrolyte solution, and the slope of a temperature change curve of the cathode electrolyte solution indicates the temperature change rate of the cathode electrolyte solution.

The balance evaluation unit 16 decides a first change time corresponding to an inflection point of the temperature change rate of the anode electrolyte solution over time and a second change time corresponding to an inflection point of the temperature change rate of the cathode electrolyte solution over time. In the embodiment of the present invention, the balance evaluation unit 16 may set the points of time that the temperature change rates of the anode electrolyte solution and the cathode electrolyte solution over time have the maximum variation, as the first and second change times, respectively.

The balance evaluation unit 16 calculates an average electrolyte oxidation number of the redox flow battery, using the first change time, the second change time, the oxidation number of the anode electrolyte, and the oxidation number of the cathode electrolyte. The balance evaluation unit 16 may compare the calculated average electrolyte oxidation number to a reference oxidation number, and decide an electrolyte balance difference and an electrolyte balance direction in the redox flow battery.

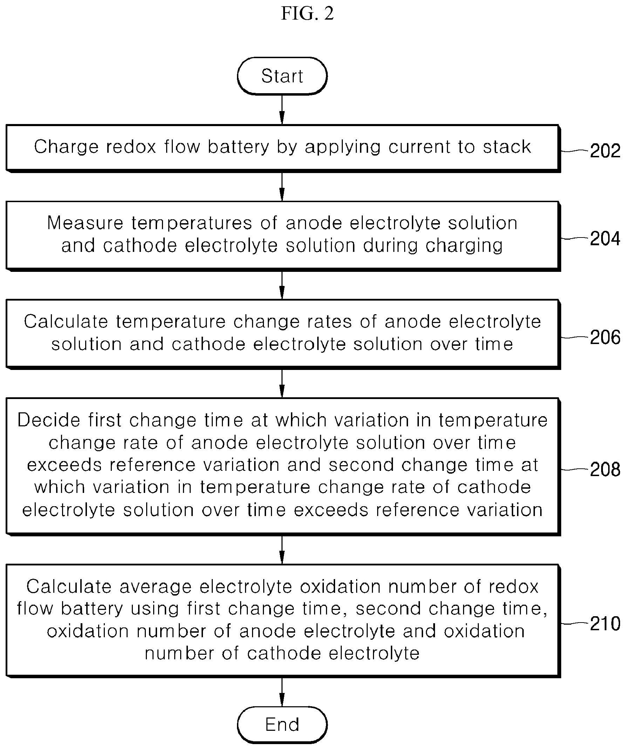

Hereafter, referring to FIGS. 1 and 2, a method for measuring a balance between electrolytes contained in electrolyte solutions of a redox flow battery according to an embodiment of the present invention will be described in detail.

FIG. 2 is a flowchart of a method for measuring an electrolyte balance of a redox flow battery according to an embodiment of the present invention.

First, the charge control unit 12 charges the redox flow battery by applying a current to the stack 106, at step 202. When a current is applied to the stack 106, the temperatures of the anode electrolyte and the cathode electrolyte rise with time. In the present embodiment, the temperature changes of the electrolyte solutions may be used to measure the electrolyte balance.

Although not illustrated in FIG. 2, the method for measuring an electrolyte balance of a redox flow battery according to the embodiment of the present invention may further include adjusting an oxidation number balance between anode electrolyte contained in the anode electrolyte solution and cathode electrolyte contained in the cathode electrolyte solution; measuring an OCV of the stack; and comparing the OCV and a reference voltage so as to decide whether to apply a current to the stack, before the step 202 of charging the redox flow battery by applying a current to the stack 106.

When the method for measuring an electrolyte balance of a redox flow battery according to the embodiment of the present invention is intended to be performed, an equal amount of electrolyte may be injected into the first and second electrolyte solution tanks 102 and 104 before the step 202 of FIG. 2. However, the electrolyte balance of the redox flow battery is typically measured during operation of the redox flow battery. During operation of the redox flow battery, the amounts of electrolyte in the anode and the cathode may be changed, due to charge or discharge.

Thus, the method according to the embodiment of the present invention may include adjusting an oxidation number balance between the anode electrolyte contained in the anode electrolyte solution and the cathode electrolyte contained in the cathode electrolyte solution, before the step 202 of charging the redox flow battery by applying a current to the stack 106.

In order to check whether the oxidation number balance between the anode electrolyte contained in the anode electrolyte solution and the cathode electrolyte contained in the cathode electrolyte solution was actually adjusted, the OCV of the stack may be measured and compared to the reference voltage. When the amount of anode electrolyte is equal to the amount of cathode electrolyte, no voltage difference occurs between the anode and the cathode. Thus, the OCV may be measured as a value close to zero. Thus, in the present embodiment, the method includes comparing the OCV to the preset reference voltage and deciding whether to apply a current to the stack, that is, whether to charge the redox flow battery. For example, when the reference voltage is set to 10mV or less, the charge control unit 12 charges the redox flow battery by applying a current to the stack 106 only in case where the measured OCV is equal to or less than 10mV. Otherwise, the charge control unit 12 may not charge the redox flow battery.

Although not illustrated in FIG. 2, the step 202 of charging the redox flow battery by applying a current to the stack 106 may include applying a predetermined magnitude of current to the stack 106 according to time.

Referring back to FIG. 2, the temperature measuring unit 14 measures the temperature of the anode electrolyte solution and the temperature of the cathode electrolyte solution, while the redox flow battery is charged, at step 204.

The temperature measuring unit 14 may measure the temperatures of the anode electrolyte solution and the cathode electrolyte solution by receiving temperature values measured by the temperature sensor (not illustrated) installed in the redox flow battery. The temperature sensor (not illustrated) may be arranged inside or outside the electrolyte solution tanks 102 and 104, or arranged inside or outside the flow paths 112, 114, 116 and 118 or the stack 106.

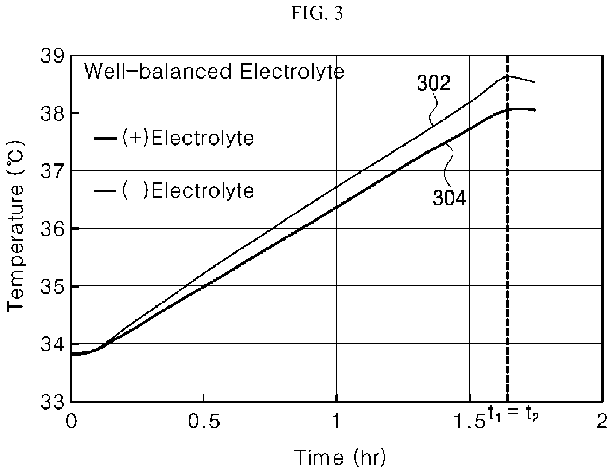

Then, the balance evaluation unit 16 calculates the temperature change rate of the anode electrolyte solution over time and the temperature change rate of the cathode electrolyte solution over time, using the temperatures of the anode electrolyte solution and the cathode electrolyte solution, which are measured by the temperature measuring unit 14, at step 206. In the present embodiment, the balance evaluation unit 16 may generate graphs (for example, FIGS. 3 to 5) indicating temperature changes of the anode electrolyte solution and the cathode electrolyte solution over time, based on the temperatures of the anode electrolyte solution and the cathode electrolyte solution, which are measured by the temperature measuring unit 14. In the generated graphs, the slope of a temperature change curve of the anode electrolyte indicates the temperature change rate of the anode electrolyte solution, and the slope of a temperature change curve of the cathode electrolyte indicates the temperature change of the cathode electrolyte solution. In this way, the balance evaluation unit 16 may calculate the temperature change rate of the anode electrolyte solution over time and the temperature change rate of the cathode electrolyte solution over time.

Then, the balance evaluation unit 16 decides a first change time corresponding to an inflection point of the temperature change rate of the anode electrolyte solution over time and a second change time corresponding to an inflection point of the temperature change rate of the cathode electrolyte over time.

For example, the temperature change rate of the anode electrolyte solution over time in the graph of FIG. 3, that is, the slope of the temperature change curve is changed with time. Referring to FIG. 3, the slope of the graph rapidly changes at time $t_1$. In the present embodiment, the point at which the slope of the graph rapidly changes is defined as an inflection point of the temperature change rate. When the slope rapidly changes, it may indicate that a variation of the slope exceeds a predetermined variation, that is, a preset reference variation. Thus, the balance evaluation unit 16 sets the time $t_1$ to the first change time, the time $t_1$ corresponding to the inflection point of the slope in the temperature curve of the anode electrolyte solution in the graph of FIG. 3. Similarly, the balance evaluation unit 16 sets a time $t_2$ to a second change time, the time $t_2$ corresponding to an inflection point of the slope in the temperature curve of the cathode electrolyte solution.

Referring back to FIG. 2, the balance evaluation unit 16 calculates an average electrolyte oxidation number of the redox flow battery, using the first and second change times decided at the step 208 and the oxidation numbers of the anode electrolyte and the cathode electrolyte. In the present embodiment, the balance evaluation unit 16 may calculate the average electrolyte oxidation number of the redox flow battery, using Equation 1 below.

[Equation 1]

$$P = \frac{A \times t_1 + B \times t_2}{t_1 + t_2}$$

In Equation 1, P represents the average electrolyte oxidation number, A represents the oxidation number of the cathode electrolyte, B represents the oxidation number of the anode electrolyte, $t_1$ represents the first change time, and $t_2$ represents the second change time. In the present embodiment, the oxidation number of the electrolyte having the higher oxidation number, between the electrolytes which are to be evaluated, is defined as the oxidation number of the anode electrolyte, and the oxidation number of the electrolyte having the lower oxidation number is defined as the oxidation number of the cathode electrolyte. For example, a redox flow battery using vanadium ions has an electrolyte state corresponding to a state in which $V^{3+}$ and $V^{4+}$ are mixed. Thus, an anode electrolyte oxidation number may be set to 4, and a cathode electrolyte oxidation number may be set to 3.

Although not illustrated in FIG. 2, the method for measuring an electrolyte balance level of a redox flow battery according to the embodiment of the present invention may further include comparing the average electrolyte oxidation number to a reference oxidation number and deciding an electrolyte balance difference and electrolyte balance direction of the redox flow battery. The reference oxidation number may be arbitrarily set by an operator. For example, when the average electrolyte oxidation number P calculated through Equation 1 is 15, the reference oxidation number is set to 5, and a difference between the average electrolyte oxidation number P and the reference oxidation number is +10, the balance evaluation unit 16 may determine that the electrolyte balance difference is 10% and the amount of tetravalence electrolyte is larger. Furthermore, when the average electrolyte oxidation number P calculated through Equation 1 is 5, the reference oxidation number is set to 10, and a difference between the average electrolyte oxidation number P and the reference oxidation number is -5, the balance evaluation unit 16 may determine that the electrolyte balance difference is 5% and the amount of trivalence electrolyte is larger.

FIGS. 3 to 5 are graphs illustrating temperature changes of electrolyte solutions over time, which are measured through the method for measuring an electrolyte balance of in a redox flow battery according to the embodiment of the present invention.

FIG. 3 illustrates a temperature change curve 302 of the cathode electrolyte solution and a temperature change curve 304 of the anode electrolyte solution over time, which are measured after the step 202 of FIG. 2, while the anode electrolyte and the cathode electrolyte achieve a balance.

When the amount of anode electrolyte and the amount of cathode electrolyte achieve a balance as illustrated in FIG. 3, the temperature change rates of the two electrolyte solutions over time, that is, the slopes of the two curves vary in a similar manner to each other. Therefore, the times at which the variations of the slopes of the respective curves exceed the reference variation, that is, the first and second change times $t_1$ and $t_2$ are equal to each other. At this time, the average electrolyte oxidation number of the redox flow battery may be calculated according to Equation 1 as follows.

[Equation 2]

$$P = \frac{3 \times t + 4 \times t}{2t} = 3.5$$

When electrolyte with an oxidation number of 3 and electrolyte with an oxidation number of 4, of which the amounts are perfectly equal to each other, are mixed as illustrated in FIG. 3, the average electrolyte oxidation number of the redox flow battery is 3.5. Therefore, the calculated average electrolyte oxidation number of 3.5 may be set to the reference oxidation number for determining a balance between the electrolyte solutions.

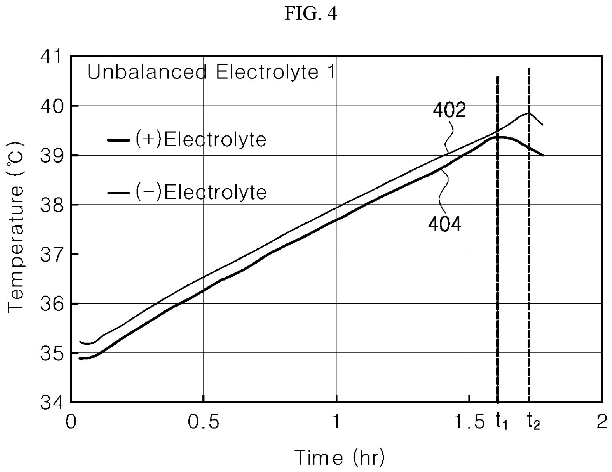

FIG. 4 illustrates a temperature change curve 402 of the cathode electrolyte solution and a temperature change curve 404 of the anode electrolyte solution over time, which are measured after the step 202 of FIG. 2, while the anode electrolyte and the cathode electrolyte do not achieve a balance.

When the amount of anode electrolyte and the amount of cathode electrolyte do not achieve a balance as illustrated in FIG. 4, the temperature change rates of the two electrolyte solutions over time, that is, the slopes of the two curves differently vary. Therefore, the times at which the variations of the slopes of the respective curves exceed the reference variation, that is, the first and second change times $t_1$ and $t_2$ corresponding to the inflection points are different from each other. In FIG. 4, the first change time $t_1$ is measured as 1.570, and the second change time $t_2$ is measured as 1.679. At this time, the average electrolyte oxidation number of the redox flow battery may be calculated according to Equation as follows.

[Equation 3]

$$P = \frac{3 \times 1.570 + 4 \times 1.679}{1.570 + 1.679} = 3.517$$

In a state of FIG. 4, the average electrolyte oxidation number of the redox flow battery is 3.517. When the average electrolyte oxidation number is compared to the reference oxidation number of 3.5, a difference of +0.017 occurs. This indicates that a balance difference between the electrolytes is 1.7%, and a sign + means that the amount of anode electrolyte with an oxidation number of 4 is larger than the amount of cathode electrolyte with an oxidation number of 3.

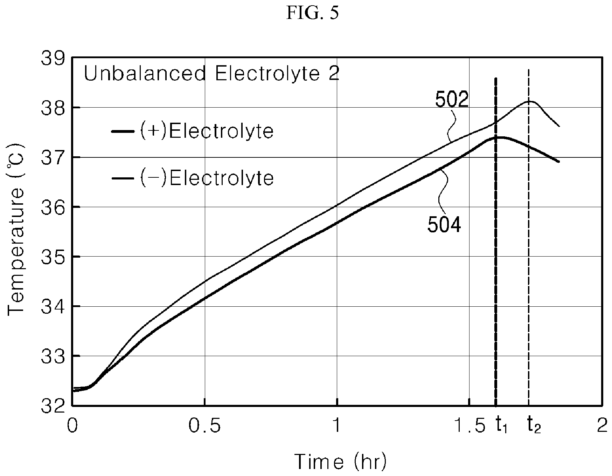

FIG. 5 illustrates a temperature change curve 502 of the cathode electrolyte solution and a temperature change curve 504 of the anode electrolyte solution over time, which are measured after the step 202 of FIG. 2, while the anode electrolyte and the cathode electrolyte do not achieve a balance.

When the amount of anode electrolyte and the amount of cathode electrolyte do not achieve a balance as illustrated in FIG. 5, the temperature change rates of the two electrolyte solutions over time, that is, the slopes of the two curves differently vary. Therefore, the times at which the variations of the slopes of the respective curves exceed the reference variation, that is, the first and second change times t1 and t2 corresponding to inflection points are different from each other. In FIG. 5, the first change time $t_1$ is measured as 1.576, and the second change time $t_2$ is measured as 1.706. At this time, the average electrolyte oxidation number of the redox flow battery may be calculated according to Equation 1 as follows.

[Equation 4]

$$P = \frac{3 \times 1.576 + 4 \times 1.706}{1.576 + 1.706} = 3.520$$

In a state of FIG. 5, the average electrolyte oxidation number of the redox flow battery is 3.520. When the average electrolyte oxidation number is compared to the reference oxidation number of 3.5, a difference of +0.020 occurs. This indicates that a balance difference between the electrolytes is 2%, and a sign + means that the amount of anode electrolyte with an oxidation number of 4 is larger than the amount of cathode electrolyte with an oxidation number of 3.

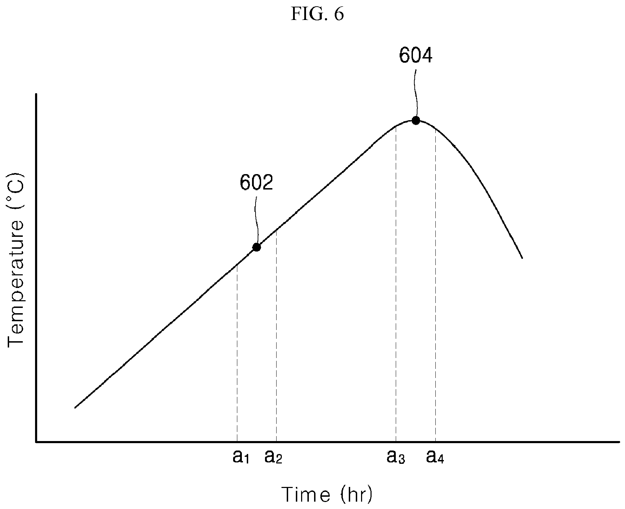

FIGS. 6 to 8 are graphs illustrating temperature changes of electrolyte solutions over time, which are measured through a method for measuring an electrolyte balance of a redox flow battery according to another embodiment of the present invention.

Referring to FIG. 6, the meaning of an inflection point defined in the present embodiment may be described as follows. In the present embodiment, a point at which a variation in temperature change rate of an electrolyte solution over time exceeds a predetermined magnitude, that is, a reference variation is defined as an inflection point. The reference variation may be arbitrarily set by an operator.

For example, referring to a point 602 of FIG. 6 based on the supposition that the reference variation is set to 0.5, a difference between a slope of 1.1 at time $a_1$ and a slope of 1.2 at time $a_2$ is 0.1. Such a slope difference does not exceed the reference variation. Thus, the point 602 is not an inflection point.

Similarly, referring to a point 602 based on the supposition that the reference variation is 0.5, a difference between a slope of 0.8 at time $a_3$ and a slope of -0.8 at time $a_4$ is 1.6. Since such a slope difference exceeds the reference variation, the point 604 corresponds to an inflection point.

The inflection point of an electrolyte solution curve in the present embodiment indicates a point at which the condition of an oxidation-reduction reaction in the redox flow battery is changed. In FIG. 6, the left side based on the inflection point 604 indicates an exothermic reaction, and the right side indicates an endothermic reaction.

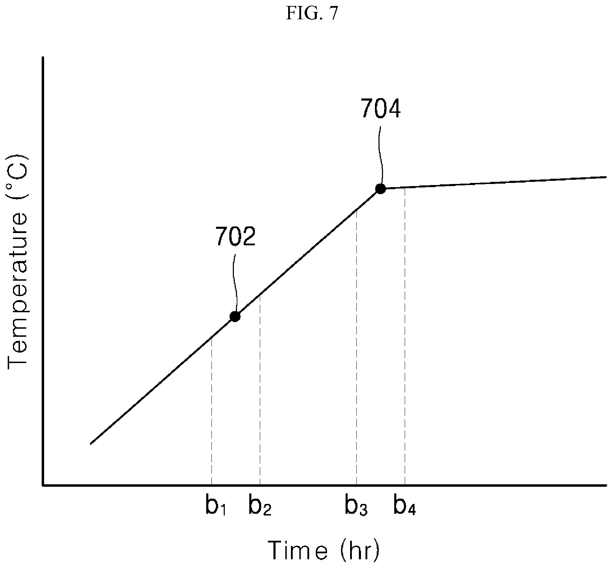

Similarly, referring to FIG. 7 based on the supposition that the reference variation is set to 0.3, a difference between a slope of 1.0 at time $b_1$ and a slope of 1.1 at time $b_2$ based on a point 702 is 0.1. Thus, the point 702 is not an inflection point. However, since a difference between a slope of 1.1 at time $b_3$ and a slope of 0.7 at time $b_4$ based on a point 704 is 0.4, a point 704 corresponds to an inflection point.

In FIG. 7, the left side based on the inflection point 704 indicates an exothermic reaction in which the amount of thermal energy is relatively large, and the right side indicates an endothermic reaction in which the amount of thermal energy is relatively small.

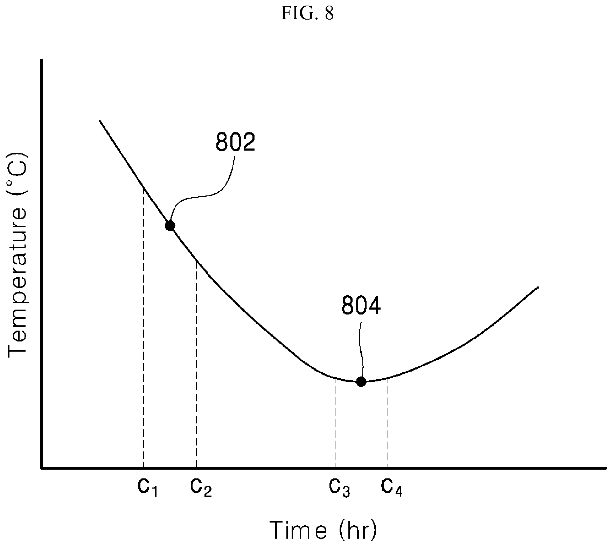

Similarly, referring to FIG. 8 based on the supposition that the reference variation is set to 0.5, a difference between a slope of -1.1 at time $c_1$ and a slope of -0.9 at time $c_2$ based on a point 802 is 0.2. Thus, the point 802 is not an inflection point. However, since a difference between a slope of -0.7 at time $c_3$ and a slope of 0.5 at time $c_4$ based on a point 804 is 0.8, a point 804 corresponds to an inflection point.

According to the embodiment of the present invention, the method and apparatus for measuring an electrolyte balance of a redox flow battery can quantitatively measure and evaluate the balance in oxidation number between electrolytes contained in the anode electrolyte solution and the cathode electrolyte solution which are used in the redox flow battery.

Furthermore, when measuring the balance between electrolytes contained in the electrolyte solutions of the redox flow battery, the method and apparatus can more easily evaluate the balance through an in-situ process, instead of an ex-situ process in which electrolyte solutions are separately extracted and evaluated through an additional device.

Furthermore, since oxidation caused by an extraction of electrolyte solution or contact between electrolyte solution and air does not occur, the method and apparatus can accurately measure the oxidation number of the electrolyte.

Furthermore, the method and apparatus can measure the electrolyte balance of the redox flow battery at a lower cost without an expensive OCV monitoring device or suitable equipment.

While various embodiments have been described above, it will be understood to those skilled in the art that the embodiments described are by way of example only. Accordingly, the disclosure described herein should not be limited based on the described embodiments.

**Claims**

1. A method for measuring a balance between electrolytes contained in electrolyte solutions of a redox flow battery, comprising:

charging the redox flow battery by applying a current to a stack;
measuring temperatures of an anode electrolyte solution and a cathode electrolyte solution while the redox flow battery is charged;
calculating a temperature change rate of the anode electrolyte solution over time and a temperature change rate of the cathode electrolyte solution over time;
deciding a first change time corresponding to an inflection point of the temperature change rate of the anode electrolyte solution over time and a second change time corresponding to an inflection point of the temperature change rate of the cathode electrolyte solution over time; and
calculating an average electrolyte oxidation number of the redox flow battery, using the first change time, the second change time, an oxidation number of the anode electrolyte and an oxidation number of the cathode electrolyte.

2. The method of claim 1, further comprising:

adjusting an oxidation balance between the anode electrolyte contained in the anode electrolyte solution and the cathode electrolyte contained in the cathode electrolyte solution;
measuring an open-circuit voltage (OCV) of the stack; and
comparing the OCV and a reference voltage so as to decide whether to apply a current to the stack.

3. The method of claim 1, wherein the charging of the redox flow battery comprises applying a predetermined magnitude of current to the stack according to time.

4. The method of claim 1, wherein the average electrolyte oxidation number of the redox flow battery is calculated by Equation 1:

[Equation 1]

$$P = \frac{A \times t_1 + B \times t_2}{t_1 + t_2},$$

where P represents the average electrolyte oxidation number, A represents the oxidation number of the cathode electrolyte, B represents the oxidation number of the anode electrolyte, $t_1$ represents the first change time, and $t_2$ represents the second change time.

5. The method of claim 1, further comprising comparing the average electrolyte oxidation number and a reference oxidation number, and deciding an electrolyte balance difference and electrolyte balance direction of the redox flow battery.

6. An apparatus for measuring a balance between electrolytes contained in electrolyte solutions of a redox flow battery, comprising:

a charge control unit configured to charge the redox flow battery by applying a current to a stack;
a temperature measuring unit configured to measure temperatures of an anode electrolyte solution and a cathode electrolyte solution while the redox flow battery is charged; and
a balance evaluation unit configured to calculate a temperature change rate of the anode electrolyte solution over time and a temperature change rate of the cathode electrolyte solution over time, decide a first change time corresponding to an inflection point of the temperature change rate of the anode electrolyte solution over time and a second change time corresponding to an inflection point of the temperature change rate of the cathode electrolyte solution over time, and calculate an average electrolyte oxidation number of the redox flow battery using the first change time, the second change time, an oxidation number of the anode electrolyte and an oxidation number of the cathode electrolyte.

7. The apparatus of claim 6, wherein the charge control unit adjusts an oxidation number balance between the anode electrolyte contained in the anode electrolyte solution and the cathode electrolyte contained in the cathode electrolyte solution, measures an OCV of the stack, and compares the OCV and a reference voltage so as to decide whether to apply a current to the stack.

8. The apparatus of claim 6, wherein the charge control unit applies a predetermined magnitude of current to the sack according to time.

9. The apparatus of claim 6, wherein the average electrolyte oxidation number of the redox flow battery is calculated by Equation 1:

[Equation 1]

$$P = \frac{A \times t_1 + B \times t_2}{t_1 + t_2},$$

where P represents the average electrolyte oxidation number, A represents the oxidation number of the cathode electrolyte, B represents the oxidation number of the anode electrolyte, $t_1$ represents the first change time, and $t_2$ represents the second change time.

10. The apparatus of claim 6, wherein the balance evaluation unit compares the average electrolyte oxidation number and a reference oxidation number, and decides an electrolyte balance difference and electrolyte balance direction of the redox flow battery.

FIG. 1

FIG. 2

```
                    ┌─────────┐
                    │  Start  │
                    └─────────┘
                         │
                         ▼
┌─────────────────────────────────────────────────────┐
│  Charge redox flow battery by applying current to    │──202
│  stack                                                │
└─────────────────────────────────────────────────────┘
                         │
                         ▼
┌─────────────────────────────────────────────────────┐
│  Measure temperatures of anode electrolyte solution   │──204
│  and cathode electrolyte solution during charging     │
└─────────────────────────────────────────────────────┘
                         │
                         ▼
┌─────────────────────────────────────────────────────┐
│  Calculate temperature change rates of anode          │──206
│  electrolyte solution and cathode electrolyte         │
│  solution over time                                   │
└─────────────────────────────────────────────────────┘
                         │
                         ▼
┌─────────────────────────────────────────────────────┐
│  Decide first change time at which variation in       │
│  temperature change rate of anode electrolyte         │
│  solution over time exceeds reference variation       │──208
│  and second change time at which variation in         │
│  temperature change rate of cathode electrolyte       │
│  solution over time exceeds reference variation       │
└─────────────────────────────────────────────────────┘
                         │
                         ▼
┌─────────────────────────────────────────────────────┐
│  Calculate average electrolyte oxidation number of    │
│  redox flow battery using first change time, second   │──210
│  change time, oxidation number of anode electrolyte   │
│  and oxidation number of cathode electrolyte          │
└─────────────────────────────────────────────────────┘
                         │
                         ▼
                    ┌─────────┐
                    │   End   │
                    └─────────┘
```

FIG. 3

FIG. 4

FIG. 5

FIG. 6

FIG. 7

FIG. 8

Europäisches
Patentamt

European
Patent Office

Office européen
des brevets

## EUROPEAN SEARCH REPORT

Application Number

EP 16 20 0413

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/099654 A1 (UNITED TECHNOLOGIES CORP [US]) 2 July 2015 (2015-07-02) * paragraphs [0005], [0024] - [0028], [0038]; figures 1,2 * | 1-10 | INV. H01M8/18 H01M8/0432 |
| A | US 2015/155727 A1 (CHANG ON KOK [US] ET AL) 4 June 2015 (2015-06-04) * paragraphs [0070], [0075] - [0077], [0102] * | 1-10 | |
| A | US 2015/162635 A1 (PARAKULAM GOPALAKRISHNAN R [US] ET AL) 11 June 2015 (2015-06-11) * paragraph [0043] * | 1-10 | |

TECHNICAL FIELDS
SEARCHED      (IPC)

H01M

The present search report has been drawn up for all claims

| Place of search | Date of completion of the search | Examiner |
|---|---|---|
| Munich | 5 January 2017 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 16 20 0413

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2017

| Patent document cited in search report | | Publication date | Patent family member(s) | | Publication date |
|---|---|---|---|---|---|
| WO 2015099654 | A1 | 02-07-2015 | EP | 3087628 A1 | 02-11-2016 |
| | | | US | 2016315339 A1 | 27-10-2016 |
| | | | WO | 2015099654 A1 | 02-07-2015 |
| US 2015155727 | A1 | 04-06-2015 | AU | 2012236451 A1 | 31-10-2013 |
| | | | CN | 103534858 A | 22-01-2014 |
| | | | EP | 2692010 A2 | 05-02-2014 |
| | | | JP | 2014514704 A | 19-06-2014 |
| | | | KR | 20140016918 A | 10-02-2014 |
| | | | US | 2013084506 A1 | 04-04-2013 |
| | | | US | 2015155727 A1 | 04-06-2015 |
| | | | WO | 2012135473 A2 | 04-10-2012 |
| | | | ZA | 201307234 B | 23-12-2014 |
| US 2015162635 | A1 | 11-06-2015 | EP | 2436081 A2 | 04-04-2012 |
| | | | ES | 2525966 T3 | 02-01-2015 |
| | | | US | 2011074357 A1 | 31-03-2011 |
| | | | US | 2014139190 A1 | 22-05-2014 |
| | | | US | 2015162635 A1 | 11-06-2015 |
| | | | WO | 2010138951 A2 | 02-12-2010 |

EPO FORM P0459

For more details about this annex : see Official Journal of the European Patent Office, No. 12/82